# EUROPÄISCHE PATENTSCHRIFT

(11) **EP 0 817 450 B1**
(45) Veröffentlichungstag und Bekanntmachung des Hinweises auf die Patenterteilung: **29.10.2003**
(21) Anmeldenummer: 97110382.5
(22) Anmeldetag: 25.06.1997
(51) Int. Cl.: H04M 1/72, H04B 1/38, H02J 7/00

(54) **Schutzhülle für drahtlose Telefone**
Protective sheath for cordless telephones
Housse protectrice pour téléphones sans fil

(30) Priorität: 26.06.1996 DE 29610958 U
(43) Veröffentlichungstag der Anmeldung: 07.01.1998
(73) Patentinhaber: Strömmer, Christine, 24326 Godau/Nehmten (DE)
(72) Erfinder: Strömmer, Klaus, D-24326 Godau (DE)
(74) Vertreter: Jaeschke, Rainer, Dipl.-Ing.

(56) Entgegenhaltungen:
- WO-A-92/08293
- DE-U- 9 417 826

## Beschreibung

Die Erfindung betrifft eine Schutzhülle für drahtlose Telefone oder Mobilfunktelefone, die über einen Akkumulator mit Energie versorgt werden und auf eine Ladestation aufsetzbar sind, die elektrische Kontakte aufweist, die mit entsprechenden Kontakten an dem Telefon zusammenwirken, so daß beim Aufsetzen des Telefons auf die Ladestation die elektrische Verbindung zum Aufladen des Akkumulators hergestellt wird. Grundsätzlich können auch andere Gegenstände in dieser Schutzhülle untergebracht sein. Im folgenden ist überwiegend von drahtlosen Telefonen die Rede, ohne daß damit eine Beschränkung verbunden sein soll.

Es sind Schutzhüllen für Mobilfunktelefone und auch für andere mobile Geräte entwickelt worden, die das betreffende Gerät im wesentlichen paßgenau umhüllen. Die Schutzhüllen bestehen in der Regel aus Leder oder einem lederartigen Material und schützen das Gerät vor äußeren mechanischen Einflüssen und Witterungseinflüssen. Um das Gerät beispielsweise bei einem Telefonat nicht aus der Schutzhülle nehmen zu müssen, weist die Schutzhülle im allgemeinen entsprechende Aussparungen für das Mikrofon, den Lautsprecher und flexible und durchsichtige Folien für das Tastenfeld auf. Weiterhin können Aussparungen vorgesehen sein, um Gerätestecker einführen zu können und um das Telefon mit einer Ladestation oder einer externen Antenne, insbesondere bei der Verwendung im Automobil, zu verbinden.

Derartige Schutzhüllen haben sich für Mobilfunktelefone bewährt, die ständig ortsungebunden mitgeführt werden. Es sind aber auch drahtlose oder schnurlose Telefone bekannt, die mit einer Ladestation oder Feststation zusammenwirken und nur in einem begrenzten Bereich ständig in Kontakt mit der Ladestation stehen. Solche Geräte werden in der Regel im Haushalt anstelle eines herkömmlichen Telefons verwendet. Die Telefone sind dabei so ausgebildet, daß sie in einer Ladestation aufgenommen werden können, wobei gleichzeitig ein Aufladen des Akkumulators für die Stromversorgung erfolgt.

In der Regel befinden sich derartige Telefone auf der Ladestation und werden nur zum Gespräch abgenommen und anschließend wieder dort aufgelegt. Durch die drahtlose Funkverbindung wird es ermöglicht, mit nur einem Telefon im gesamten Haus, der gesamten Wohnung oder auch im Garten erreichbar zu sein. Auch haben sich derartige drahtlose Telefone dort bewährt, wo in einem begrenzten Raum ein Telefon herumgereicht oder beliebig plaziert werden muß.

Auch hier wäre eine Schutzhülle für die drahtlosen Telefone wünschenswert. Da es jedoch zu umständlich ist, das Telefon vor dem Aufsetzten auf die Ladestation stets aus der Schutzhülle zu nehmen, so daß die Kontakte zum Aufladen des Akkumulators freiliegen, ist bislang auf eine derartige Schutzhülle verzichtet worden. Insbesondere sind die bekannten Schutzhüllen aus einem relativ starken Ledermaterial, um einen ausreichenden Schutz gegen äußere Einflüsse zu bewirken. Ein starkes Material verhindert jedoch ein exaktes Aufsetzen des Telefons auf die Ladestation, wie es aber für einen einwandfreien Ladevorgang erforderlich wäre. Dies liegt insbesondere daran, daß die elektrischen Kontakte häufig einen Federstift aufweisen, der durch das Auflegen des Telefons zumindest teilweise niedergedrückt wird, um einen einwandfreien Kontakt zu bewirken. Da jedoch die Länge des Stiftes einerseits und der Federweg andererseits begrenzt sind, stört eine Schutzhülle in der Regel beim Herstellen des elektrischen Kontaktes.

Der Erfindung liegt die Aufgabe zugrunde, eine Schutzhülle der eingangs geschilderten Art so zu verbessern, daß diese auch für solche drahtlose Geräte einsetzbar sind, die auf eine Ladestation aufsetzbar sind, wobei ein Aufladen des Akkumulators bei angelegter Schutzhülle möglich sein soll.

Eine ähnliche Schutzhülle ist bereits aus dem Gebrauchsmuster DE-U-9 417 826 bekannt.

Die Aufgabe wird gemäß der Erfindung dadurch gelöst, daß die Schutzhülle das Telefon zumindest teilweise paßgenau umhüllt und zumindest im Bereich der elektrischen Kontakte aus einem dünnen Material besteht und wenigstens eine Aussparung aufweist, so daß das Telefon mit der Schutzhülle auf die Ladestation aufsetzbar und der Akkumulator aufladbar ist. Durch die Verwendung eines relativ dünnen Materials wird gewährleistet, daß die Schutzhülle beim Auflegen des Telefons nicht stört und ein elektrischer Kontakt herstellbar ist.

Grundsätzlich ist es zweckmäßig, wenn das Material im Bereich des elektrischen Kontaktes eine Dicke aufweist, die kleiner als der Federweg des betreffenden elektrischen Kontaktes ist. Dies hat den Vorteil, daß eine elektrische Verbindung in jedem Fall gewährleistet werden kann. Das Material kann beispielsweise eine Stärke haben, die der Hälfte oder nur einem Drittel des Federweges entspricht. Hierbei ist es selbstverständlich unerheblich, ob der federnd ausgebildete Kontakt an dem Telefon oder an der Ladestation angeordnet ist.

Grundsätzlich ist es möglich, daß die Aussparungen als Durchbrechungen ausgebildet sind, die den Bereich um den betreffenden elektrischen Kontakt herum freilassen. Dies hat den Vorteil, daß das Telefon weitestgehend von der Schutzhülle umhüllt ist, so daß eine Beschädigung des Gehäuses nicht zu befürchten ist. Außerdem wird auch ein gefälliges Äußeres bewirkt, da das in der Regel andersfarbige Gehäuse des Telefons vollständig umhüllt ist.

Es kann aber auch vorgesehen werden, daß sich die Aussparung über den gesamten Bereich des Telefons erstreckt, an dem die Kontakte angeordnet sind. Dies ist insbesondere dann vorteilhaft, wenn die elektrischen Kontakte eng nebeneinander liegen oder wenn das Telefon nahezu spielfrei in der Ladestation in diesem Bereich gehalten wird.

Gemäß einer Ausführungsform der Erfindung ist vorgesehen, daß die Schutzhülle zumindest in dem Bereich der elektrischen Kontakte ein Material aufweist, das eine geringere Stärke als das der übrigen Schutzhülle hat und in dem die Aussparungen angeordnet sind. Dies hat den Vorteil, daß das Telefon vollständig umschlossen werden kann, wobei durch die Verwendung eines stärkeren Material in dem Bereich, der von der Ladestation nicht berührt wird oder der für die Herstellung eines elektrischen Kontaktes nicht exakt in der Ladestation gehalten werden muß, ein größerer Schutz vor Beschädigungen erreicht werden kann.

Häufig sind die Ladestationen mit wenigstens einem seitlichen Führungsvorsprung versehen, um ein genaues Aufsetzen und Halten des Telefons zu ermöglichen. Hier ist gemäß der Erfindung vorgesehen, daß die Schutzhülle zumindest in dem mit dem Führungsvorsprung korrespondierenden Bereich des Telefons eine Aussparung aufweist. Es kann aber auch vorgesehen werden, daß die Schutzhülle zumindest in dem mit dem Führungsvorsprung korrespondierenden Bereich des Telefons ein Material aufweist, das eine geringer Stärke als das der übrigen Schutzhülle hat. Durch diese Maßnahmen wird erreicht, daß die Schutzhülle das paßgenaue Aufsetzen nicht behindert und nicht erschwert.

Grundsätzlich ist es möglich, daß die Schutzhülle aus einem einheitlichen Material, wie Leder, Kunstleder oder dergleichen besteht. Gemäß einer weiteren Ausführungsform der Erfindung ist vorgesehen, daß das Material geringerer Stärke aus einem textilen Stoff besteht, während das andere Material Leder ist. Die Verwendung von textilem Material, wie Leinen, Baumwolle, Nylon und dergleichen hat den Vorteil, daß dieses im Vergleich zu Leder relativ dünn sein kann. Selbstverständlich ist es auch möglich, daß das Material geringerer Stärke aus einem dünnen Leder besteht, während das andere Material aus relativ dickem Leder ist.

Gemäß einer anderen Ausführungsform der Erfindung ist vorgesehen, daß jedem elektrischen Kontakt eine Aussparung zugeordnet ist, wobei die Aussparung mit einem elektrisch leitenden Zwischenstück verschlossen ist. Dies hat den Vorteil, daß auch bei geringeren Federwegen des elektrischen Kontaktelementes oder bei dickeren Schutzhüllen stets ein elektrischer Kontakt herstellbar ist.

Zweckmäßig ist es hierbei, wenn das leitende Zwischenstück auf wenigstens einer Seite eine Erhebung aufweist oder konvex ausgebildet ist. Das Zwischenstück wird dann unter Vorspannung der Schutzhülle stets an das Kontaktelement des Telefons gepreßt, während die andere Seite ohne weiteres mit dem elektrischen Kontakt der Ladestation in Verbindung gebracht werden kann.

Weiterhin kann es zweckmäßig sein, wenn zumindest die Oberfläche des leitenden Zwischenstücks aus einem nicht oder schwer korrodierenden Material besteht. Das Material kann beispielsweise Silber oder Kupfer sein. Auf jeden Fall wird durch diese und die vorstehende Maßnahme die Herstellung eines guten elektrischen Kontaktes unterstützt.

Die Erfindung wird im folgenden anhand der Zeichnung näher erläutert. Es zeigen:

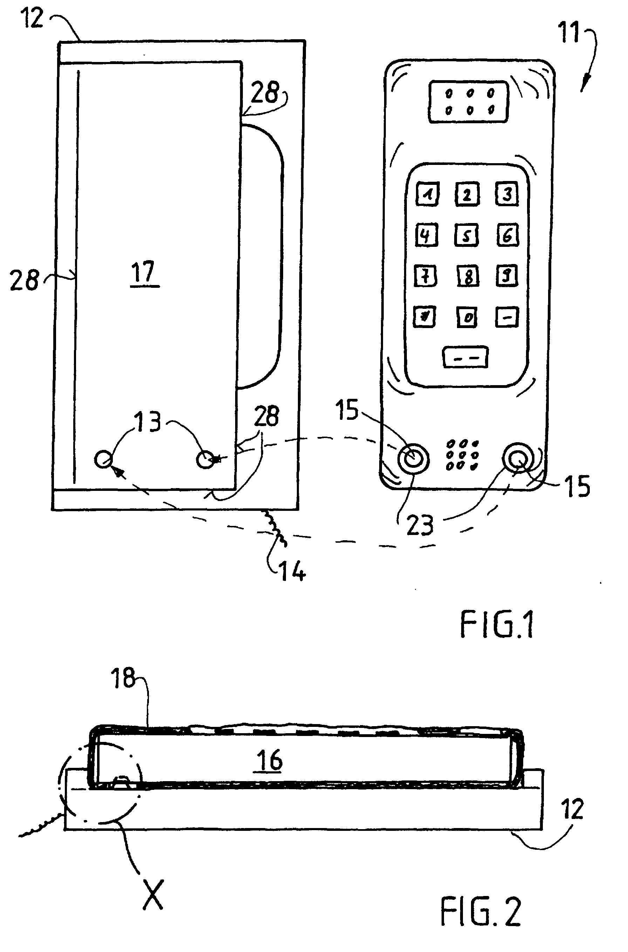

- Fig. 1: ein drahtloses Telefon mit dazugehöriger Ladestation,
- Fig. 2: eine Seitenansicht der Ladestation bei aufgelegtem Telefon und geschnitten dargestellter Schutzhülle,
- Fig. 3: die Einzelheit X in Fig. 2,
- Fig. 4: die Einzelheit X in Fig. 2, jedoch gemäß einer anderen Ausführungsform, und
- Fig. 5: eine Schutzhülle in perspektivischer Darstellung.

Das in der Zeichnung dargestellte Telefonsystem weist ein schnurloses Telefon 11 auf, daß auf eine Ladestation 12 auflegbar ist. Das Telefon 11 kann dabei in Funkverbindung mit dieser Ladestation 12 oder mit einer anderen Feststation stehen. Selbstverständlich ist es auch möglich, daß das Telefon ein Mobilfunktelefon ist, daß überregional mit einem Telekommunikationsnetz in Verbindung steht.

Die Ladestation weist elektrische Kontakte 13 auf, die mit einem nicht gezeigten Ladegerät in Verbindung stehen, das über eine elektrische Leitung 14 an ein Stromnetz angeschlossen werden kann. Das Telefon 11 weist ebenfalls elektrische Kontakte 15 auf, die mit den elektrischen Kontakten 13 der Ladestation 12 korrespondieren. Im allgemeinen ist die Anordnung so getroffen, daß die elektrischen Kontakte 13 der Ladestation 12 als federnde Stifte ausgebildet sind, während die elektrischen Kontakte 15 des Telefons als elektrisch leitende Plättchen ausgebildet sind, die in das Gehäuse 16 des Telefons im wesentlichen bündig eingelassen sind.

Durch diese Anordnung wird bewirkt, daß beim Auflegen des Telefons 11 in die entsprechende Aufnahme 17 der Ladestation 12 eine elektrische Verbindung hergestellt wird, wodurch der Akkumulator, der das Telefon mit Strom versorgt, aufgeladen wird und im aufgeladenen Zustand gehalten wird. In der Regel sind die Abmessungen der Aufnahme und des Telefons so aufeinander abgestimmt, daß die Herstellung der elektrischen Verbindung stets gewährleistet wird.

Das Telefon 11 ist mit einer Schutzhülle 18 versehen, um eine Beschädigung des Gehäuses 16 durch äußere Einflüsse zu vermeiden. Die Schutzhülle weist für die Bedienung des Telefons entsprechende Aussparungen 19, 20, 21 für das Tastenfeld, das Mikrophon und den Lautsprecher und ggf. für eventuell hervorragende Antenne des Telefons auf. Die Aussparungen können zudem mit einer flexiblen und durchsichtigen Folie abgedeckt sein. Ferner ist ein Verschluß, beispielsweise ein Reißverschluß 22, vorgesehen, um das Telefon in die Schutzhülle stecken und wieder herauszunehmen zu können.

Ferner sind auf der Schutzhülle 18 Aussparungen 23 vorgesehen, die im Bereich der elektrischen Kontakte 15 des Telefons angeordnet sind. Ferner besteht die Schutzhülle 18 zumindest in dem Bereich der Kontakte aus einem dünnen Material. Dieser Bereich kann sich beispielsweise über das gesamte Ende 24 erstrecken, das in der Fig. 5 schraffiert ist. Es kann aber auch nur die entsprechende Fläche 25 entsprechend dünn ausgebildet sein. Weiterhin kann vorgesehen werden, daß dieser schraffierte Bereich 24 oder der entsprechende Flächenabschnitt 25, der über den Kontakten 15 des Telefons liegt, als eine Aussparung ausgebildet ist, so daß das Gehäuse 16 dort frei liegt.

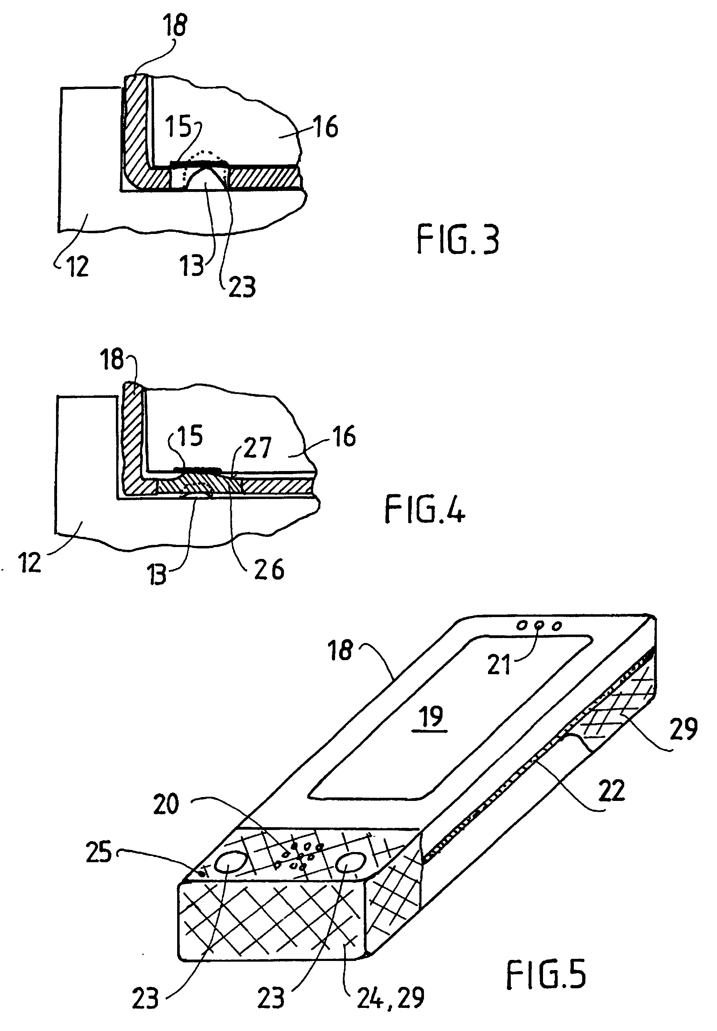

Wie insbesondere aus Fig. 3 ersichtlich, ist die Dicke des Materials in diesem Bereich so ausgebildet, daß es die Herstellung der elektrischen Verbindung nicht behindert. Insbesondere ist die Dicke des Materials in diesem Bereich kleiner als der Federweg des betreffenden elektrischen Kontaktes 13. Eine mögliche obere Endstellung des Kontaktes 13 bei nicht aufgelegtem Telefon ist in der Zeichnung punktiert dargestellt.

In Fig. 4 ist eine andere Möglichkeit der Ausbildung der Schutzhülle im Bereich der Kontaktstellen gezeigt. Hier sind die betreffenden Aussparungen durch elektrisch leitende Zwischenstücke 26 verschlossen. Durch dieses Zwischenstück 26 kann stets eine gute elektrische Verbindung der Kontakte bewirkt werden. Das Zwischenstück ist vorzugsweise auf seiner dem starren Kontaktelement 15 des Telefons zugewandten Oberfläche 27 leicht konvex gewölbt ausgebildet. Durch die straffe Schutzhülle wird das Zwischenstück 26 fest an den Kontakt 15 gepreßt. Das Zwischenstück kann beispielsweise aus Silber oder Kupfer bestehen und beispielsweise als Niet ausgebildet sein. Bei dieser Ausführungsform ist es nicht zwingend erforderlich, daß die Schutzhülle in dem betreffenden Bereich aus einem dünneren Material besteht.

Häufig weist die Ladestation 11 seitliche Führungsvorsprünge 28 auf, um das Einsetzten des Telefons 11 in die Aufnahme 17 zu erleichtern und um eine exakte Positionierung desselben über den Kontakten zu ermöglichen. Um zu vermeiden, daß das Telefon mit Schutzhülle in die Aufnahme aufgrund dieser Führungsvorsprünge 28 eingepreßt werden müßte, wodurch die Handhabbarkeit erschwert werden würde, ist vorgesehen, daß die Schutzhülle 18 in diesen, mit den Führungsvorsprüngen korrespondierenden Bereichen 29 aus einem dünnen Material, beispielsweise aus dünnem Leder oder einem textilen Material besteht. Diese Bereiche sind in der Fig. 5 schraffiert dargestellt. Es ist natürlich auch möglich, daß die Schutzhülle in diesen Bereichen Aussparungen aufweist, so daß eine Behinderung beim Auflegen durch die Schutzhülle weitestgehend vermieden werden kann.

Bei der in der Zeichnung dargestellten Ausführungsform handelt es sich lediglich um ein Beispiel. Die Schutzhülle kann im wesentlichen exakt an das jeweilige Telefon angepaßt werden und eignet sich insbesondere für Telefone der DECT-Norm. Auch kann die Aufnahme der Ladestation anders ausgebildet sein. Insbesondere können die Führungsvorsprünge an einer anderen Stelle der Aufnahme angeordnet sein. Auch sind in der Zeichnung die Kontakte auf dem Boden bzw. der Oberfläche der Aufnahme bzw. des Telefons angeordnet. Es ist natürlich auch möglich, daß die korrespondierenden Kontakte an einer Stirnseite und/oder an anderen Stellen des Telefons bzw. der Ladestation angeordnet sind. Zweckmäßig ist es auf jeden Fall, wenn im Bereich der Kontakte oder der Führungselemente der Ladestation keine Nähte vorhanden sind, so daß die Kontur des Telefons nahezu unverändert bleibt.

### Bezugszeichenliste

- 11: Telefon
- 12: Ladestation
- 13: elektrischer Kontakt
- 14: elektrische Leitung
- 15: elektrischer Kontakt
- 16: Gehäuse
- 17: Aufnahme
- 18: Schutzhülle
- 19: Aussparung
- 20: Aussparung
- 21: Aussparung
- 22: Reißverschluß
- 23: Aussparung
- 24: Ende
- 25: Fläche
- 26: Zwischenstück
- 27: Oberfläche
- 28: Führungsvorsprung
- 29: Bereich

## Patentansprüche

1. Schutzhülle (18) für drahtlose Telefone (11) oder Mobilfunktelefone, die über einen Akkumulator mit Energie versorgt werden und auf eine Ladestation (12) aufsetzbar sind, die elektrische Kontakte (13) aufweist, die federnd mit entsprechenden Kontakten (15) an dem Telefon zusammenwirken, so ausgebildet daß beim Aufsetzen des Telefons auf die Ladestation die elektrische Verbindung zum Aufladen des Akkumulators hergestellt wird, **dadurch gekennzeichnet, daß** die Schutzhülle das Telefon zumindest teilweise paßgenau umhüllt und zumindest im Bereich (24, 25) der elektrischen Kontakte eng an dem Telefon anliegt, aus einem dünnen Material besteht und wenigstens eine Aussparung (23) aufweist, so ausgebildet daß das Telefon mit der Schutzhülle auf die Ladestation aufsetzbar und der Akkumulator aufladbar ist.

2. Schutzhülle nach Anspruch 1, **dadurch gekennzeichnet, daß** das Material zumindest in dem Bereich der elektrischen Kontakte eine Dicke aufweist, die kleiner als der Federweg des betreffenden elektrischen Kontaktes (13) ist.

3. Schutzhülle nach Anspruch 1 oder 2, **dadurch gekennzeichnet, daß** die Aussparungen (23) als Durchbrechungen ausgebildet sind, die den Bereich um den betreffenden elektrischen Kontakt herum freilassen.

4. Schutzhülle nach Anspruch 1 bis 3, **dadurch gekennzeichnet, daß** die Aussparung (24, 25) sich über den gesamten Bereich des Telefons erstreckt, an dem die Kontakte angeordnet sind.

5. Schutzhülle nach einem der Ansprüche 1 bis 4, **dadurch gekennzeichnet, daß** die Schutzhülle zumindest in dem Bereich (24, 25) der elektrischen Kontakte ein Material aufweist, das eine geringere Stärke als das der übrigen Schutzhülle hat und in dem die Aussparungen angeordnet sind.

6. Schutzhülle nach einem der Ansprüche 1 bis 5, wobei die Ladestation mit wenigstens einem seitlichen Führungsvorsprung (28) versehen ist, um ein genaues Aufsetzen und Halten des Telefons zu ermöglichen, **dadurch gekennzeichnet, daß** die Schutzhülle zumindest in dem mit dem Führungsvorsprung korrespondierenden Bereich (29) des Telefons eine Aussparung aufweist.

7. Schutzhülle nach einem der Ansprüche 1 bis 6, wobei die Ladestation mit wenigstens einem seitlichen Führungsvorsprung (28) versehen ist, um ein genaues Aufsetzen und Halten des Telefons zu ermöglichen, **dadurch gekennzeichnet, daß** die Schutzhülle zumindest in dem mit dem Führungsvorsprung korrespondierenden Bereich (29) des Telefons ein Material aufweist, das eine geringer Stärke als das der übrigen Schutzhülle hat.

8. Schutzhülle nach einem der Ansprüche 1 bis 7, **dadurch gekennzeichnet, daß** das Material geringerer Stärke aus einem textilen Stoff besteht, während das andere Material Leder ist.

9. Schutzhülle nach einem der Ansprüche 1 bis 8, **dadurch gekennzeichnet, daß** jedem elektrischen Kontakt eine Aussparung zugeordnet ist, wobei die Aussparung mit einem elektrisch leitenden Zwischenstück (26) verschlossen ist.

10. Schutzhülle nach Anspruch 9, **dadurch gekennzeichnet, daß** das leitende Zwischenstück auf wenigstens einer Seite (27) eine Erhebung aufweist oder konvex ausgebildet ist.

11. Schutzhülle nach Anspruch 9 oder 10, **dadurch gekennzeichnet, daß** zumindest die Oberfläche des leitenden Zwischenstücks aus einem nicht oder schwer korrodierenden Material besteht.

## Claims

1. A protective cover (18) for wireless telephones (11) or cellular telephones, which are supplied with energy via an accumulator and can be placed onto a charging station (12) comprising electrical contacts (13) which interact resiliently with corresponding contacts (15) on the telephone, constructed so that when the telephone is placed onto the charging station the electrical connection for charging the accumulator is produced,
**characterised in that** the protective cover envelops the telephone at least to some extent in a precisely fitting manner and at least in the region (24, 25) of the electrical contacts it lies close to the telephone, is made from a thin material and comprises at least one cut-out (23), constructed so that the telephone with the protective cover can be placed onto the charging station and the accumulator can be charged.

2. A protective cover according to Claim 1,
**characterised in that** at least in the region of the electrical contacts the material has a thickness which is less than the spring excursion of the respective electrical contact (13).

3. A protective cover according to Claim 1 or 2,
**characterised in that** the cut-outs (23) are constructed as perforations which leave the region around the respective electrical contact free.

4. A protective cover according to Claim 1 to 3,
**characterised in that** the cut-out (24, 25) extends over the entire region of the telephone at which the contacts are disposed.

5. A protective cover according to one of Claims 1 to 4,
**characterised in that** at least in the region (24, 25) of the electrical contacts the protective cover comprises a material which has a lesser thickness than that of the remaining protective cover and in which the cut-outs are disposed.

6. A protective cover according to one of Claims 1 to 5, wherein the charging station is provided with at least one lateral guide projection (28) so as to enable the telephone to be precisely placed and held,
**characterised in that** at least in the region (29) of the telephone corresponding to the guide projection the protective cover has a cut-out.

7. A protective cover according to one of Claims 1 to 6, wherein the charging station is provided with at least one lateral guide projection (28) to enable the telephone to be precisely placed and held,
**characterised in that** at least in the region (29) of the telephone corresponding to the guide projection the protective cover comprises a material which is of a lesser thickness than that of the remaining protective cover.

8. A protective cover according to one of Claims 1 to 7,
**characterised in that** the material of lesser thickness is made from a textile material, while the other material is leather.

9. A protective cover according to one of Claims 1 to 8,
**characterised in that** a cut-out is associated with each electrical contact, the cut-out being sealed by an electrically conductive adapter (26).

10. A protective cover according to Claim 9,
**characterised in that** on at least one side (27) the conductive adapter has a raised portion or a convex construction.

11. A protective cover according to Claim 9 or 10,
**characterised in that** at least the surface of the conductive adapter is made from a non-corrosive or slightly corrosive material.

## Revendications

1. Housse protectrice (18) pour téléphones sans fil (11) ou téléphones mobiles, alimentés en énergie à l'aide d'un accumulateur et pouvant être placés sur une station de charge (12) présentant des contacts électriques (13) qui interagissent de manière élastique avec les contacts (15) correspondants sur le téléphone, de telle sorte que, lorsque l'on place le téléphone sur la station de charge, la connexion électrique permettant de charger l'accumulateur est fabriquée,
**caractérisée en ce que**
la housse protectrice enveloppe le téléphone au moins partiellement de manière précise ajustée, et approche étroitement au moins la zone (24, 25) des contacts électriques associés au téléphone, est composée d'un matériau fin et présente au moins un évidement (23) conçu de telle façon que le téléphone peut être placé sur la station de charge avec la housse protectrice et que l'accumulateur peut être chargé.

2. Housse protectrice selon la revendication 1,
**caractérisée en ce que**
le matériel présente au moins dans la zone des contacts électriques une épaisseur plus petite que le débattement du contact électrique concerné (13).

3. Housse protectrice selon la revendication 1 ou 2,
**caractérisée en ce que**
les évidements (23) sont conçus comme des brèches qui libèrent la zone entourant le contact électrique concerné.

4. Housse protectrice selon la revendication 1 à 3,
**caractérisée en ce que**
l'évidement (24, 25) s'étend sur toute la zone du téléphone sur laquelle sont placés les contacts.

5. Housse protectrice selon l'une quelconque des revendications 1 à 4,
**caractérisée en ce que**
la housse protectrice présente un matériel au moins dans la zone (24, 25) des contacts électriques, ce matériel possédant une puissance plus faible que le matériau de la housse protectrice habituelle et dans lequel se trouvent les évidements.

6. Housse protectrice selon l'une quelconque des revendications 1 à 5, pour laquelle la station de charge est équipée d'au moins une baguette de guidage latérale (28) permettant de placer correctement le téléphone et de le maintenir en place,
**caractérisée en ce que**
la housse protectrice présente un évidement au moins dans la zone (29) correspondant à la baguette de guidage du téléphone.

7. Housse protectrice selon l'une quelconque des revendications 1 à 6, pour laquelle la station de charge est équipée d'au moins une baguette de guidage latérale (28) permettant de placer correctement le téléphone et de le maintenir en place,
**caractérisée en ce que**
la housse protectrice présente un matériau au moins dans la zone (29) correspondant à la baguette de guidage du téléphone, ce matériau possédant une plus faible résistance que la housse protectrice habituelle.

8. Housse protectrice selon l'une quelconque des revendications 1 à 7,
**caractérisée en ce que**
le matériau de résistance faible est composé d'une matière textile, alors que l'autre matériau est en cuir.

9. Housse protectrice selon l'une quelconque des revendications 1 à 8,
**caractérisée en ce qu'**
un évidement est affecté à chaque contact électrique, cet évidement étant relié à une pièce intermédiaire (26) conductrice d'électricité.

10. Housse protectrice selon la revendication 9,
**caractérisée en ce que**
sur au moins un côté (27) la pièce intermédiaire conductrice présente une bosse ou est convexe.

11. Housse protectrice selon la revendication 9 ou 10,
**caractérisée en ce qu'**
au moins la surface de la pièce intermédiaire conductrice est composée d'un matériau non ou très peu oxydable.
